Europäisches Patentamt

European Patent Office

Office européen des brevets

(19)

(11) Veröffentlichungsnummer: **0 373 309**
**A1**

## (12) EUROPÄISCHE PATENTANMELDUNG

(21) Anmeldenummer: 89118300.6

(22) Anmeldetag: 03.10.89

(51) Int. Cl.⁵: **G01B 21/04**

(30) Priorität: 05.10.88 DE 3833779

(43) Veröffentlichungstag der Anmeldung:
20.06.90 Patentblatt 90/25

(84) Benannte Vertragsstaaten:
AT CH DE FR GB IT LI SE

(71) Anmelder: Mauser-Werke Oberndorf GmbH
Teckstrasse 11
D-7238 Oberndorf(DE)

(72) Erfinder: Ross, Günter
Zollernweg 18
D-7238 Oberndorf(DE)
Erfinder: Band, Gerhard
Dammstrasse 18
D-7238 Oberndorf(DE)
Erfinder: Gruhler, Siegfried
Zollerstrasse 10
D-7243 Vohringen 2(DE)
Erfinder: Schmid, Jürgen
Längenbrandstrasse 1
D-7239 Fluorn-Winzeln(DE)

(74) Vertreter: Hofmann, Gerhard, Dipl.-Ing.
Patentassessor et al
Stephanstrasse 49
D-8500 Nürnberg(DE)

(54) Mehrkoordinaten-Messmaschine.

(57) Mit der Mehrkoordinaten-Meßmaschine (1) wird die in Abhängigkeit der Verfahrachsen X, Y und Z, der Verfahrrichtungen und der Verfahrgeschwindigkeiten eines Meßkopfes (12) durch Antasten mittels eines Taststiftes (13) an ein Endmaß ermittelte Umkehrspanne einer Meßwertaufnahme- und Meßwertauswerteeinheit (17) zugeleitet. In einem angeschlossenen Rechner (18) werden die Werte mit Antastwerten eines Meßobjektes (16) kompensiert. Das Ergebnis der Kompensation wird einer Meßwertanzeige (19) und wahlweise einer Meßmaschinensteuerung (20) zugeführt.

# Mehrkoordinaten-Meßmaschine

Die Erfindung betrifft eine Mehrkoordinaten-Meßmaschine mit einem in dem Koordinaten X, Y und Z verfahrbaren Meßkopf mit Taststiften.

An Mehrkoordinaten-Meßmaschinen werden immer höhere Genauigkeitsanforderungen gestellt, die im Regelfall durch verschiedene Kompensationsmöglichkeiten erfüllt wurden. Als eine weitere Größe, die Genauigkeit der Mehrkoordinaten-Meßmaschinen bzw. der Meßergebnisse zu erhöhen, wurde die sogenannte Umkehrspanne erkannt.

Auf diese Umkehrspanne haben unterschiedliche Maschinenfunktionen einer Koordinaten-Meßmaschine Einfluß. Dies sind einmal verschiedene Maschinenfunktionen der Meßmaschine bei der Führungs-Fehleraufnahme und der Meßfunktion mit schaltendem Tastkopf, weiterhin das Genauigkeitsverhalten der Meßmaschine während der Abnahmezeit durch Umwelteinflüsse wie Temperaturänderung, Temperaturstrahlung und Bodenschwingung. Hinzu kommen mögliche Fehlergrößen der Abnahme-Meßgeräte während der Abnahmezeit und die Reibung der Führungen am Tastkopf, welche zu reproduzierbaren Fehlern führt. Diese Fehler sind abhängig von der Meßposition in Quer- und Pinolenstellung.

Ferner gibt es nach Einflußgrößen bestimmte Funktionen mit unterschiedlichen Fehlermöglichkeiten. Durch das dynamische Maschinenverhalten im Tastsystem kann eine Deformation der Taststifte durch richtungsabhängiges Antasten eintreten. Dazu können Schwingungen und eine Drift auftreten. Unterschiedliche Verfahrgeschwindigkeiten führen zu unterschiedlicher Reibung und zu Schwingungen.

Schließlich sind auch die Umweltbedingungen unter dem Zeiteinfluß im Klimaraum zu berücksichtigen.

Es ist deshalb Aufgabe der Erfindung, bei einer Mehrkoordinaten-Meßmaschine der eingangs genannten Art die hohen Genauigkeitsanforderungen durch weitere Kompensationsmöglichkeiten zu erfüllen und die erkannte Umkehrspanne durch geeignete Maßnahmen rechnerisch zu kompensieren.

Erfindungsgemäß wird diese Aufgabe dadurch gelöst, daß die in Abhängigkeit der Verfahrachsen X und/oder Y und/oder Z der Verfahrrichtungen und der Verfahrgeschwindigkeiten des Meßkopfes durch Antasten eines Taststiftes an ein Endmaß ermittelte Umkehrspanne der Mehrkoordinaten-Meßmaschine einer Meßwertaufnahme- und Meßwertauswerteeinheit zugeleitet und in einem Rechner mit den jeweiligen Antastwerten an ein Meßobjekt kompensiert wird, wobei das Ergebnis einer Meßwertanzeige und wahlweise einer Meßmaschinen-Steuerung zugeführt wird.

In Ausbildung dieser Erfindung kann die Umkehrspanne durch Einsatz eines Laser-Interferometers in Bezug auf die Winkelabweichung in den Verfahrachsen ermittelt werden. Alternativ kann die Umkehrspanne durch Einsatz von Kraftsensoren am Querträger der Mehrkoordinaten-Meßmaschine ermittelt werden.

Mit den genannten erfinderischen Merkmalen kann bei einer Mehrkoordinaten-Meßmaschine bei erkannter Umkehrspanne eine Erhöhung der Systemgenauigkeit erzielt werden. Die Variablen können entsprechend der Maschinencharakteristiken ermittelt werden. Dazu ist eine Überprüfung der Parameter während der Betriebszeit mit einem einfachen Verfahren möglich. Die Methode der Umkehrspannen-Erfassung ist einfach.

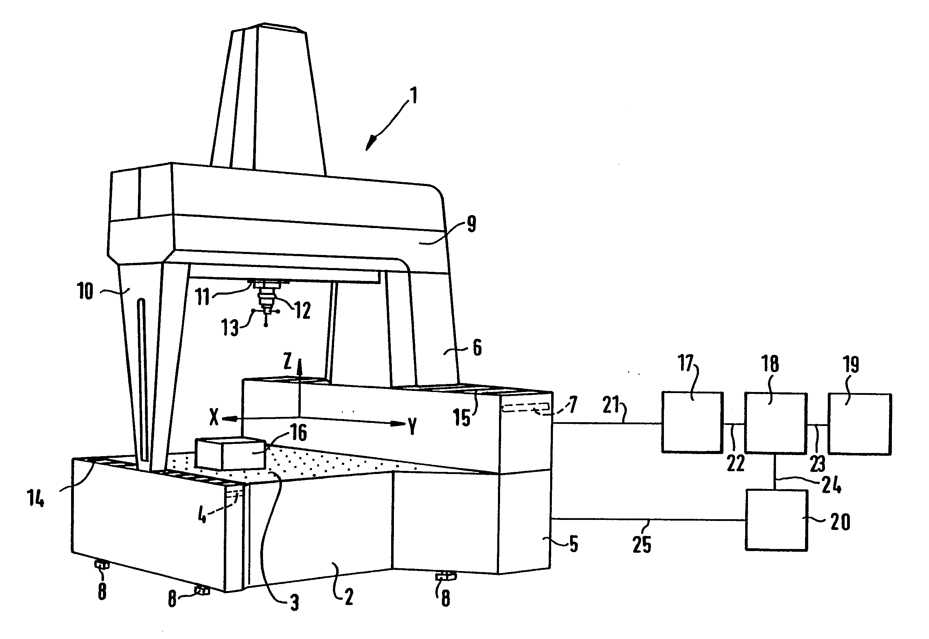

In der Zeichnung ist ein Beispiel der Erfindung dargestellt.

Die Mehrkoordinaten-Meßmaschine 1 beispielsweise in Portalbauweise, besitzt ein Grundgestell 2 mit einem Meßtisch 3 und einer Führung 4 für den Abstützarm 10 des Querträgers 9. Die Rückseite des Grundgestells wird durch einen Träger 5 gebildet, der sich über den Meßtisch erhebt. In dem oberen Bereich des Trägers 5 ist eine Führung 7 für den hinteren Abstützarm 6 des Querträgers 9 vorgesehen. Die Aufstellung des Grundgestells 2 erfolgt auf Luftfederelementen 8. Hier sind selbstverständlich auch andere Tragelemente möglich.

Quer über dem Meßtisch 3 befindet sich der auf den Abstützarmen 10 und 6 ruhende Querträger 9, welcher ebenfalls Führungen für einen Meßschlitten 11 besitzt. An dem Meßschlitten 11 ist der in den Verfahrachsen X, Y und Z bewegbare Meßkopf 12 mit Taststiften 13 angeordnet. Die Führungen 4 und 7 des Grundgestells 2 sind durch Kunststoff-Jalousien 14 und 15 abgedeckt und gegen Staub geschützt.

Auf dem Meßtisch 3 ruht ein Meßobjekt 16.

Mit der Mehrkoordinaten-Meßmaschine 1 ist über eine Leitung 21 eine Meßwertaufnahme- und Meßwertauswerteeinheit 17 verbunden, die ihrerseits über eine Leitung 22 an einen Rechner 18 angeschlossen ist. Von dem Rechner 18 führt eine erste Leitung 23 zu einer Meßwertanzeige und eine zweite Leitung 24 zu einer Meßmaschinensteuerung 20, die mit einer weiteren Leitung 25 mit der Koordinaten-Meßmaschine 1 in Verbindung steht.

Die Ermittlung der erkannten Umkehrspanne kann nun beispielsweise mittels eines Endmaßes vorgenommen werden. In diesem Fall soll in dem gezeigten Beispiel das Meßobjekt 16 das Eichnormal darstellen. Die Feststellung der Umkehrspanne erfolgt durch Abnahme von Endmaßen an dem Eichnormal in allen Koordinaten-Richtungen X, Y und Z. Dabei wird gleichzeitig die Verfahrrichtung des Meßkopfes 12 und auch seine Verfahrgeschwindigkeit berücksichtigt. Die so ermittelten Werte werden der Meßwertaufnahme- und Meßwertauswerteeinheit 17 zugeleitet und in einen Rechner 18 mit den jeweiligen Antastwerten an einem Meßobjekt 16 kompensiert. Das Ergebnis dieser Kompensation im Rechner 18 wird der Meßwertanzeige 19 und wahlweise auch einer Meßmaschinensteuerung 20 zugeführt.

Anstelle des Endmaßes über ein Eichnormal (16) kann die Umkehrspanne auch durch Einsatz eines hier nicht gezeigten Laser-Interferometers oder eines Kraftsensors am Querträger 9 ermittelt werden. Die Ermittlung der Umkehrspanne durch den Einsatz eines Laser-Interferometers geschieht in Bezug auf die Winkelabweichung in den Verfahrachsen X, Y und Z.

## Ansprüche

1. Mehrkoordinaten-Meßmaschine mit einem in den Koordinaten X, Y und Z verfahrbaren Meßkopf mit Taststiften,
dadurch gekennzeichnet,
daß die in Abhängigkeit der Verfahrachsen X und/oder Y und/oder Z, der Verfahrrichtungen und der Verfahrgeschwindigkeiten des Meßkopfes (12) durch Antasten eines Taststiftes (13) an ein Endmaß ermittelte Umkehrspanne der Mehrkoordinaten-Meßmaschine (1) einer Meßwertaufnahme- und Meßwertauswerteeinheit (17) zugeleitet und in einem Rechner (19) mit den jeweiligen Antastwerten an ein Meßobjekt (16) kompensiert wird, wobei das Ergebnis einer Meßwertanzeige (19) und wahlweise einer Meßmaschinensteuerung (20) zugeführt wird.

2. Mehrkoordinaten-Meßmaschine nach Anspruch 1,
dadurch gekennzeichnet,
daß die Umkehrspanne durch Einsatz eines Laserinterferometers in Bezug auf die Winkelabweichung in den Verfahrachsen ermittelt wird.

3. Mehrkoordinaten-Meßmaschine nach Anspruch 1,
dadurch gekennzeichnet,
daß die Umkehrspanne durch Einsatz von Kraftsensoren am Querträger (9) der Mehrkoordinaten-Meßmaschine ermittelt wird.

| | EINSCHLÄGIGE DOKUMENTE | | EP 89118300.6 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
| X | <u>EP - A1 - 0 279 926</u> (WARNER & SWASEY) * Zusammenfassung; Spalte 7, Zeilen 12-24; Spalte 8, Zeilen 3-55; Ansprüche 1-4; Fig. 1,2,3 * -- | 1,2 | G 01 B 21/04 |
| A | <u>DE - A1 - 3 336 854</u> (HEIDENHAIN) * Gesamt; insbesondere Zusammenfassung; Anspruch 1 * -- | 1 | |
| A | <u>DE - B2 - 2 829 222</u> (SOCIETE D'OPTIQUE) * Spalte 4, Zeile 5 - Spalte 5, Zeile 7; Fig. 1,3,4,5 * -- | 1,2 | |
| A | <u>DE - A1 - 3 011 003</u> (RENISHAW) * Gesamt; insbesondere Seite 3, letzter Absatz - Seite 5, Zeile 10; Seite 9, 1. Absatz; Seite 12, 3. Absatz; Fig. 1 * -- | 1,3 | RECHERCHIERTE SACHGEBIETE (Int. Cl.⁵) G 01 B |
| A | <u>US - A - 4 663 852</u> (GUARINI) * Gesamt; insbesondere Spalte 13, Zeile 19 - Spalte 14, Zeile 36; Fig. 1,2 * ---- | 1 | |

Der vorliegende Recherchenbericht wurde für alle Patentansprüche erstellt.

| Recherchenort | Abschlußdatum der Recherche | Prüfer |
|---|---|---|
| WIEN | 27-03-1990 | TOMASELLI |